# FASCICULE DE BREVET EUROPEEN

(11) **EP 4 128 482 B1**
(45) Date de publication et mention de la délivrance du brevet: **03.01.2024**
(21) Numéro de dépôt: 21712829.7
(22) Date de dépôt: 19.03.2021
(51) Int. Cl.: H02K 1/276

(54) **STRUCTURE D'UN CONCENTRATEUR DE FLUX MAGNETIQUE D'UN ROTOR DE MOTEUR A COURANT CONTINU SANS BALAI**
AUFBAU EINES MAGNETFLUSSKONZENTRATORS FÜR EINEN ROTOR FÜR EINEN BÜRSTENLOSEN GLEICHSTROMMOTOR
STRUCTURE OF A MAGNETIC FLUX CONCENTRATOR FOR A ROTOR FOR A BRUSHLESS DC MOTOR

(30) Priorité: 24.03.2020 FR 2002861
(43) Date de publication de la demande: 08.02.2023
(73) Titulaire: Delta Dore, 35270 Bonnemain (FR)
(72) Inventeur: SCHRAEN, Maxime, 35270 BONNEMAIN (FR); DUFEE, Julien, 35270 BONNEMAIN (FR)
(74) Mandataire: Cabinet Le Guen Maillet
(86) Numéro de dépôt international: PCT/EP2021/057076
(87) Numéro de publication internationale: WO 2021/191073

(56) Documents cités:
- EP-A2- 2 626 975
- WO-A1-2016/182117
- CN-A- 105 703 500
- CN-A- 105 811 608
- CN-A- 105 827 038
- DE-A1-102007 024 406
- DE-A1-102011 122 023
- FR-A1- 3 018 009
- US-A- 5 786 650
- US-A1- 2017 149 317

## Description

### DOMAINE TECHNIQUE

La présente invention concerne le domaine des moteurs à courant continu sans balai. Plus particulièrement, l'invention concerne un rotor de moteur à courant continu sans balai comportant un concentrateur de flux magnétique permettant d'augmenter un rendement du moteur à courant continu sans balai et concerne une structure du concentrateur de flux magnétique.

### ETAT DE LA TECHNIQUE ANTERIEURE

Afin d'augmenter le rendement d'un moteur à courant continu sans balai, une technique consiste à modifier un rotor du moteur en intégrant un concentrateur de flux magnétique. Le concentrateur de flux magnétique a pour effet d'augmenter un flux magnétique d'un aimant permanent du rotor et donc de maximiser un effet d'induction magnétique entre le rotor et un stator, ce qui permet d'augmenter un rendement du moteur.

Généralement, le concentrateur de flux magnétique d'un rotor est réalisé par collage avec un aimant permanent réalisé par frittage. Toutefois, le collage est un procédé délicat qui peut générer des défauts dans le rotor et limiter des performances du moteur. De plus, une montée en température du rotor liée au fonctionnement du moteur peut faire fondre une partie de la colle, ce qui entraîne un déplacement de zones magnétiques de l'aimant permanent et réduit également les performances du moteur.

L'utilisation d'un procédé de moulage par injection et polarisation de l'aimant permanent permet de limiter les défauts dans la structure du rotor. Toutefois, un tel procédé nécessite un positionnement et un maintien précis du concentrateur de flux magnétique pendant les étapes d'injection et de polarisation pour empêcher l'apparition de défauts et conserver des propriétés magnétiques optimales. Or, des structures existantes de concentrateur de flux magnétique ne permettent pas d'assurer le positionnement et le maintien du concentrateur de flux magnétique de manière fiable et industrialisable.

Il est alors souhaitable de pallier ces inconvénients de l'état de la technique.

Il est notamment souhaitable de fournir une solution qui permette de faciliter le positionnement et le maintien du concentrateur de flux lors des étapes d'injection et de polarisation d'un aimant permanent tout en assurant une conservation des propriétés magnétiques de l'aimant permanent. Il est en particulier souhaitable de fournir une solution qui permette d'assurer le positionnement et le maintien du concentrateur de flux magnétique qui soit fiable, aisée à mettre en oeuvre et facilement industrialisable. Les documents US 5 786 560 A, DE 10 2007 024406 A1 et DE 10 2011 122023 décrivent des concentrateurs de flux de l'art antérieur.

### EXPOSE DE L'INVENTION

Un objet de la présente invention est de proposer un concentrateur de flux magnétique d'un rotor, le rotor comportant un arbre de rotation, le concentrateur de flux magnétique étant disposé autour de l'arbre de rotation et le rotor comportant des zones magnétiques d'un aimant permanent. Le concentrateur de flux magnétique comporte un empilement de tôles, l'empilement de tôles comportant une pluralité de tôles d'un premier type et une pluralité de tôles d'un deuxième type, chaque tôle du premier type comportant six éléments polaires détachés les uns des autres et chaque tôle du deuxième type comportant six éléments polaires reliés entre eux par un anneau situé au centre de la tôle de deuxième type et destiné à entourer l'arbre de rotation. Les éléments polaires de chaque tôle du deuxième type sont régulièrement espacés autour de l'anneau de sorte que tous les espacements situés entre deux éléments polaires liés adjacents sont identiques, et chaque élément polaire d'une tôle de l'empilement de tôles est aligné avec un élément polaire d'une autre tôle de l'empilement de tôles de sorte à former six empilements régulièrement espacés d'éléments polaires.

Ainsi, le positionnement et les dimensions du concentrateur de flux magnétique sont contrôlés grâce aux tôles de deuxième type et les propriétés magnétiques du concentrateur de flux sont optimisées grâce aux tôles de premier type.

Selon un mode de réalisation particulier, chaque élément polaire comporte une agrafe formée par une zone en relief sur ledit élément polaire, et les agrafes d'éléments polaires empilés s'emboîtent les unes avec les autres de sorte à maintenir les tôles de l'empilement de tôles entre elles.

Ainsi, le maintien des tôles entre elles est assuré pendant l'assemblage et l'utilisation du concentrateur de flux magnétique.

Selon un mode de réalisation particulier, chaque élément polaire comporte deux encoches, chaque encoche d'un élément polaire d'un empilement d'éléments polaires étant alignée avec une encoche de chacun des autres éléments polaires dudit empilement d'éléments polaires.

Ainsi, l'alignement des tôles est facilité lors de l'assemblage du concentrateur de flux magnétique et la matière magnétique est aisément fixée.

Selon un mode de réalisation particulier, les éléments polaires ont une forme géométrique délimitée par deux arcs de cercles concentriques et par deux sections de droite non parallèles formant un angle d'ouverture, et une forme symétrique par rapport à un axe, ledit axe passant par le centre des arcs de cercles concentriques et étant une bissectrice de l'angle d'ouverture. Selon un mode de réalisation particulier, l'empilement de tôles comporte une proportion de tôles du deuxième type comprise entre 5% et 29%.

Selon l'invention, l'empilement de tôles comporte des ensembles de dix ou quinze tôles du premier type, les ensembles étant alternés avec une tôle du deuxième type.

Selon un mode de réalisation particulier, l'empilement de tôles comporte à chaque extrémité trois ou cinq tôles du deuxième type successives.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1A] illustre schématiquement un rotor de moteur à courant continu sans balai comportant un concentrateur de flux magnétique selon un premier mode de réalisation ;
[Fig. 1B] illustre schématiquement un rotor de moteur à courant continu sans balai comportant un concentrateur de flux magnétique selon un deuxième mode de réalisation ;
[Fig. 2] illustre schématiquement un empilement de tôles du concentrateur de flux magnétique ;
[Fig. 3] illustre schématiquement une tôle de liaison du concentrateur de flux magnétique ;
[Fig. 4] illustre schématiquement une tôle non liée du concentrateur de flux magnétique.

### EXPOSE DETAILLE DE MODES DE REALISATION

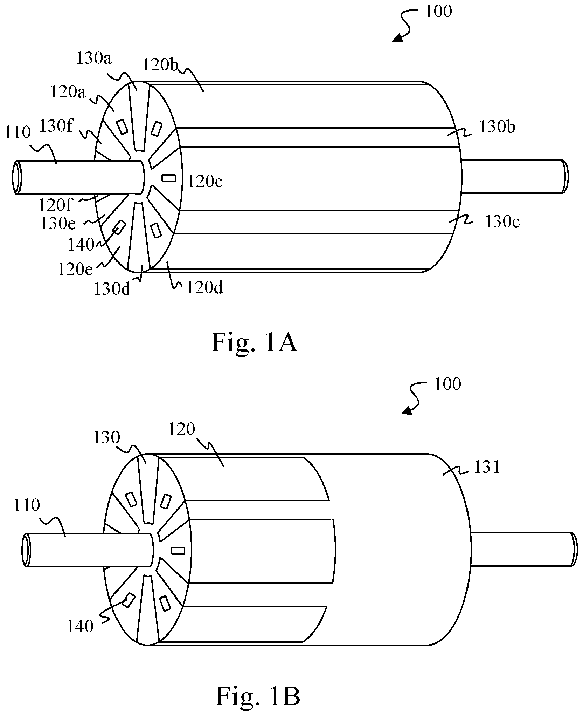

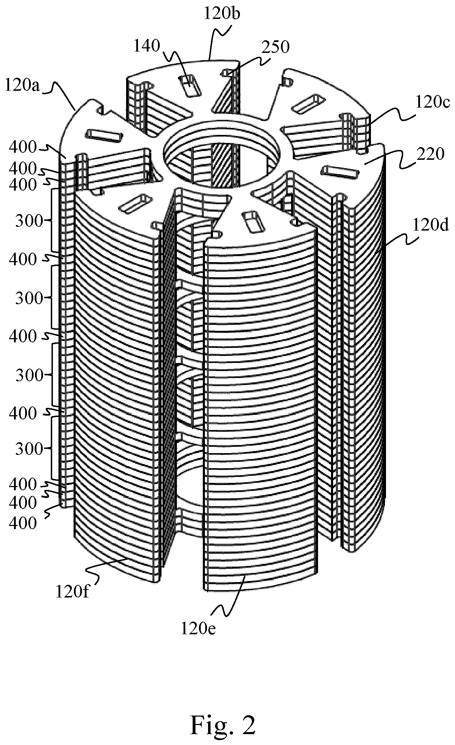

La **Fig. 1** illustre ainsi schématiquement un rotor 100 de moteur à courant continu sans balai comportant un concentrateur de flux magnétique selon un mode de réalisation particulier. Le rotor 100 comporte un arbre de rotation 110. L'arbre de rotation 110 peut être en acier et mesure par exemple entre 6 mm de diamètre et 8 mm de diamètre pour un rotor de diamètre compris entre 10 mm et 40 mm. Le rotor 100 comporte en outre le concentrateur de flux magnétique comportant six pièces polaires 120a, 120b, 120c,120d,120e, 120f disposées autour de l'arbre de rotation 110. Le rotor 100 comporte en outre un aimant permanent comportant plusieurs zones magnétiques 130a, 130b, 130c, 130d, 130e, 130f. Chaque zone magnétique 130a à f est délimitée par deux pièces polaires 120 adjacentes du concentrateur de flux magnétique. L'aimant permanent est fabriqué par un procédé qui comporte une étape de surmoulage, autrement dit d'injection d'une résine magnétique dans une cavité entre les pièces polaires 120 et autour de l'arbre de rotation 110, et une étape de polarisation de la résine magnétique. L'aimant permanent est par exemple en plastoferrite ou en plastoneodyme. Les zones magnétiques 130 sont polarisées selon une direction de polarisation ortho-radiale et deux zones magnétiques consécutives ont des sens de polarisation contraires. Par exemple, une zone magnétique 130 polarisée dans un sens horaire est située entre deux zones magnétiques 130 polarisées dans un sens anti-horaire. Chaque pièce polaire 120 comporte une agrafe 140 à sa surface ayant une fonction décrite ci-après en relation avec les Figs. 2 à 4.

La **Fig. 1B** illustre schématiquement le rotor 100 de moteur à courant continu sans balai comportant le concentrateur de flux magnétique selon un mode de réalisation alternatif. Le rotor 100 comporte, autour de l'arbre de rotation 110, les six pièces polaires 120 du concentrateur de flux magnétique. L'aimant permanent comporte les zones magnétiques 130 délimitées par les pièces polaires 120 et comporte en outre une zone magnétique de freinage 131. La zone magnétique de freinage 131 est cylindrique, continue, et située autour de l'arbre de rotation 110. La zone magnétique de freinage 131 est délimitée d'un côté par une extrémité du concentrateur de flux magnétique, au centre par l'arbre de rotation, d'un autre côté par une limite de l'aimant permanent et vers l'extérieur par un diamètre extérieur du rotor 100. La zone magnétique de freinage 131 est fabriquée simultanément avec les zones magnétiques 130 de l'aimant permanent, par injection et polarisation d'une résine magnétique.

Selon un mode de réalisation, le rotor 100 a par exemple un diamètre compris entre 10 et 40 mm et comporte un concentrateur de flux magnétique de 50 mm de longueur et une zone magnétique de freinage de 25 mm de longueur.

La **Fig. 2** illustre schématiquement en perspective le concentrateur de flux magnétique. Le concentrateur de flux magnétique est structuré avec un empilement de tôles 300, 400 comportant chacune six éléments polaires 220. Les tôles 300, 400 empilées les unes sur les autres sont alignées les unes par rapport aux autres pour former six empilements d'éléments polaires 220 de sorte à former les six pièces polaires 120 du concentrateur de flux magnétique. Chaque pièce polaire 120a à f comporte ainsi un empilement d'éléments polaires 220 de différentes tôles 300, 400, chaque élément polaire 220 d'une tôle 300, 400 se superposant à un élément polaire d'une autre tôle 300, 400. Les tôles 300, 400 peuvent être des tôles métalliques planes et ayant une épaisseur minimale comprise entre 0,3 mm et 1 mm.

Les tôles 300, 400 sont disposées autour de l'arbre de rotation 110 et le concentrateur de flux magnétique est assemblé à l'arbre de rotation 110 par emmanchement en force de l'empilement de tôles 300, 400 sur l'arbre de rotation 110. Selon un mode de réalisation particulier, le rotor 100 a par exemple un diamètre compris entre 10 mm et 40 mm et comporte un concentrateur de flux magnétique de longueur comprise entre 30 mm et 60 mm. Dans le cas d'un concentrateur de flux magnétique de 50 mm, correspondant à une hauteur de l'empilement de tôles 300, 400 de 50 mm, ledit concentrateur de flux magnétique comporte par exemple cent tôles 300, 400 de 0,5 mm d'épaisseur. Selon un mode de réalisation alternatif, ladite hauteur de l'empilement de tôles 300, 400 est de 40 mm. Ledit rotor 100 de diamètre compris entre 10 mm et 40 mm est par exemple associé à un stator de diamètre extérieur de 42 mm pour constituer un moteur à courant continu sans balai. Chaque élément polaire 220 comporte une agrafe 140 à sa surface. L'agrafe 140 est une zone en relief de l'élément polaire 220 fabriquée par exemple par emboutissage de la tôle métallique. Les agrafes 140 de tous les éléments polaires 220 ont des dimensions identiques et sont positionnées au même endroit sur l'élément polaire 220, autrement dit à des distances équivalentes des bords de l'élément polaire 220.

Dans un empilement d'éléments polaires 220, les agrafes 140 de tous les éléments polaires 220 se superposent et s'emboîtent, ce qui permet d'assembler et maintenir entre eux les éléments polaires 220 d'une pièce polaire 120. Les agrafes 140 permettent en outre d'aligner aisément lesdits éléments polaires 220 entre eux. Ainsi, les éléments polaires 220 d'une pièce polaire 120 sont maintenus entre eux et alignés pendant les étapes d'injection et de polarisation de la résine magnétique et l'apparition de défauts dans les zones magnétiques 130 est réduite.

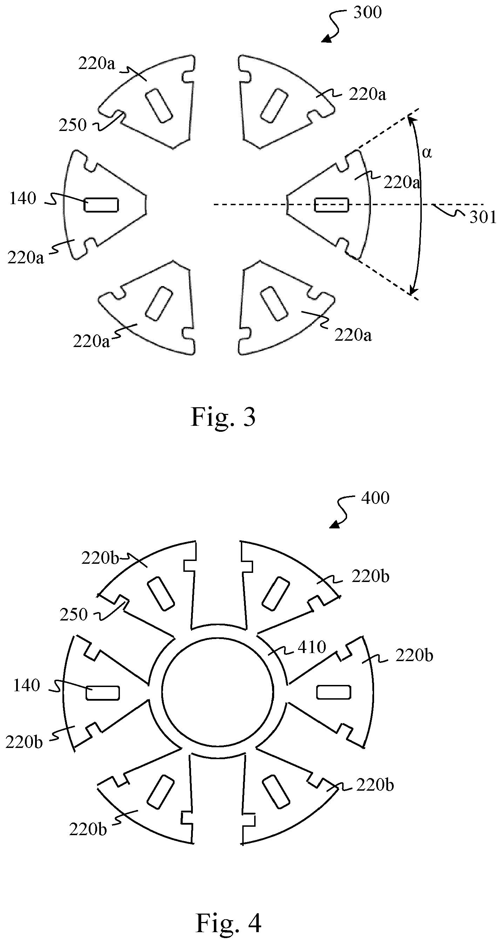

Chaque élément polaire 220 comporte en outre deux encoches 250. Les encoches 250 sont utilisées comme guides lors d'un assemblage d'éléments polaires 220 pour contrôler l'alignement des éléments polaires 220 entre eux par exemple à l'aide de goulottes utilisées lors de la fabrication d'un concentrateur de flux magnétique. Les encoches 250 sont en outre utilisées pour accrocher et fixer la résine magnétique pendant les étapes d'injection et de polarisation et pour maintenir les zones magnétiques 130 lors de l'utilisation du rotor 100. L'empilement de tôles 300, 400 du concentrateur magnétique comporte des tôles d'un premier type, dites tôles non liées 300, décrites ci-après en relation avec la Fig. 3 et permettant de maximiser les propriétés magnétiques du concentrateur de flux, et des tôles d'un deuxième type, dites tôles de liaison 400, décrites ci-après en relation avec la Fig. 4 et permettant de contrôler le positionnement des pièces polaires 120 autour de l'arbre de rotation 110 et de maintenir l'empilement de tôles 300, 400 pendant le surmoulage de l'aimant permanent à l'aide des tôles de liaison 400.

L'empilement de tôles 300, 400 comporte, à chaque extrémité, un ensemble d'une pluralité de tôles de liaison 400 successives. Par exemple, l'empilement de tôles 300, 400 comporte trois tôles de liaison 300 successives à une première extrémité et trois tôles de liaison 300 successives à une deuxième extrémité Alternativement, l'empilement de tôles 300, 400 comporte à chaque extrémité cinq tôles de liaison 400 successives.

L'empilement de tôles 300, 400 comporte entre chaque extrémité, des ensembles d'une pluralité de tôles non liées 300 s'alternant chacun avec une tôle de liaison 400. Par exemple, au-dessus de trois tôles de liaison 400 à une première extrémité du concentrateur de flux magnétique sont empilés successivement un premier ensemble de dix tôles non liées 300, puis une tôle de liaison 400, un deuxième ensemble de dix tôles non liées 300 suivi d'une tôle de liaison 400, un troisième ensemble de dix tôles non liées 300 puis trois tôles de liaison 400 situées à l'autre extrémité du concentrateur de flux magnétique. Les ensembles d'une pluralité de tôles non liées 300 peuvent, selon un mode de réalisation particulier, comporter quinze tôles non liées 300 successives.

La **Fig. 3** illustre schématiquement une tôle du premier type, dite tôle non liée 300, du concentrateur de flux magnétique. La tôle non liée 300 comporte six éléments polaires 220, dits éléments polaires détachés 220a, distincts les uns des autres et donc non connectés entre eux. Chaque élément polaire détaché 220a a une forme délimitée par deux arcs de cercles concentriques et par deux sections de droite non parallèles formant un angle d'ouverture α. L'élément polaire détaché 220a a en outre une forme symétrique par rapport à un axe central 301, l'axe central 301 passant par le centre des arcs de cercles concentriques et étant une bissectrice de l'angle d'ouverture α.

Selon un mode de réalisation particulier, l'angle d'ouverture est compris entre 60 et 68° afin d'optimiser un flux magnétique rentrant dans des dents statoriques, autrement dit dans des parties du stator situées au centre d'enroulements statoriques.

Selon un mode de réalisation particulier, l'agrafe 140 de chaque élément polaire détaché 220a a une forme rectangulaire dont les dimensions sont par exemple 2,5 mm de longueur et 1 mm de largeur pour un rotor 100 de diamètre compris entre 10 mm et 40 mm. L'agrafe 140 est préférentiellement centrée sur l'élément polaire détaché 220a. Autrement dit un premier axe de symétrie de l'agrafe 140 est confondu avec l'axe central 301 et un deuxième axe de symétrie de l'agrafe 140 est situé à égale distance entre une première droite et une deuxième droite, la première droite étant tangente à un arc de cercle concentrique en un point passant par l'axe central 301 et la deuxième droite étant tangente à l'autre arc de cercle concentrique en un point passant par l'axe central 301.

Chaque élément polaire détaché 220a comporte en outre deux encoches 250. Pour chaque élément polaire détaché 220a, une première encoche 250 est située sur l'une des deux sections de droite non parallèles délimitant l'élément polaire détaché 220a et une deuxième encoche 250 est située sur l'autre des deux sections de droite non parallèles. Une encoche 250 peut être réalisée par exemple par une découpe par poinçonnage d'une tôle métallique. Dans l'empilement de tôles 300, 400 du concentrateur de flux magnétique, les tôles non liées 300 permettent de maximiser les propriétés magnétiques du concentrateur de flux grâce à une forme et un contour optimaux qui sont définis en tenant compte de leurs propriétés magnétiques et non des contraintes d'assemblage mécanique du concentrateur de flux magnétique.

La **Fig. 4** illustre schématiquement une tôle du deuxième type, dite tôle de liaison 400, du concentrateur de flux magnétique. La tôle de liaison 400 comporte six éléments polaires dits éléments polaires liés 220b et comporte en outre un anneau central 410 situé vers l'intérieur de la tôle de liaison 400 et reliant les six éléments polaires liés 220b. Chaque élément polaire lié 220b a des caractéristiques géométriques identiques à l'élément polaire détaché 220a décrit précédemment en relation avec la Fig. 2 et est en outre relié à l'anneau central 410 au niveau de l'arc de cercle concentrique situé vers le centre des cercles concentriques. Un élément polaire lié 220b comporte en outre une agrafe 140 et deux encoches 250 disposées sur l'élément polaire lié 220b de manière similaire à l'agrafe 140 et aux encoches 250 de l'élément polaire détaché 220a.

L'anneau central 410 a un diamètre intérieur légèrement inférieur au diamètre de l'arbre de rotation 110 et l'arbre de rotation 110 comporte des cannelures afin d'effectuer un assemblage par emmanchement en force de l'empilement de tôles 300, 400 sur l'arbre de rotation 110. Une distance radiale entre l'élément polaire lié 220b et l'arbre de rotation 110 est donc définie par une largeur de l'anneau central 410, autrement dit par la différence entre le rayon extérieur et le rayon intérieur de l'anneau central 410. Selon un mode de réalisation particulier, l'anneau central 410 a une largeur comprise entre 0,5 mm et 2 mm.

Un espacement entre deux éléments polaires liés 220b adjacents de la tôle de liaison 400 est prédéfini. Les éléments polaires liés 220b étant régulièrement espacés autour de l'anneau central 410, chaque espacement entre deux éléments polaires liés 220b adjacents est ainsi identique. En outre, chaque espacement entre deux éléments polaires liés 220b adjacents définit un espacement entre deux pièces polaires 120 adjacentes dans un plan orthogonal à l'axe de rotation 110. Toutes les zones magnétiques 130 présentent ainsi des dimensions identiques et qui dépendent de la géométrie de la tôle de liaison 400. Ainsi, dans l'empilement de tôles 300, 400 du concentrateur de flux magnétique, les tôles de liaison 400 permettent de contrôler le positionnement des pièces polaires 120 autour de l'arbre 110. En particulier, les tôles de liaison 400 permettent de contrôler l'espacement des pièces polaires 120 entre elles et donc les dimensions des zones magnétiques 130 grâce à l'espacement prédéfini entre deux éléments polaires liés 220b adjacents. Les tôles de liaison 400 permettent en outre de contrôler la distance radiale entre les pièces polaires 120 et l'arbre de rotation 110 grâce à la largeur de l'anneau central 410. De plus, les tôles de liaison 400 permettent, en association avec les agrafes 140, de maintenir l'empilement de tôles 300, 400 pendant l'assemblage du concentrateur de flux magnétique et pendant le surmoulage de l'aimant permanent.

## Revendications

1. Concentrateur de flux magnétique d'un rotor (100), le rotor (100) comportant un arbre de rotation (110), le concentrateur de flux magnétique étant disposé autour de l'arbre de rotation (110), le rotor comportant des zones magnétiques (130) d'un aimant permanent, le concentrateur de flux magnétique comportant un empilement de tôles (300, 400), l'empilement de tôles comportant une pluralité de tôles d'un premier type (300) et une pluralité de tôles d'un deuxième type (400), chaque tôle du premier type (300) comportant six éléments polaires (220) détachés les uns des autres et chaque tôle du deuxième type (400) comportant six éléments polaires (220), dits éléments polaires liés (220b), reliés entre eux par un anneau situé au centre de la tôle de deuxième type et destiné à entourer l'arbre de rotation (110), les éléments polaires (220) de chaque tôle du deuxième type (400) étant régulièrement espacés autour de l'anneau de sorte que tous les espacements situés entre deux éléments polaires liés (220b) adjacents sont identiques, chaque élément polaire (220) d'une tôle (300, 400) de l'empilement de tôles étant aligné avec un élément polaire (220) d'une autre tôle (300, 400) de l'empilement de tôles de sorte à former six empilements régulièrement espacés d'éléments polaires (220), **caractérisé en ce que** l'empilement de tôles (300, 400) comporte des ensembles de dix ou quinze tôles du premier type (300), les ensembles étant alternés avec une tôle du deuxième type (400).

2. Concentrateur de flux magnétique selon la revendication 1, **caractérisé en ce que** chaque élément polaire (220) comporte une agrafe (140) formée par une zone en relief sur ledit élément polaire (220), et **en ce que** les agrafes (140) d'éléments polaires (220) empilés s'emboîtent les unes avec les autres de sorte à maintenir les tôles (300, 400) de l'empilement de tôles entre elles.

3. Concentrateur de flux magnétique selon l'une des revendications 1 ou 2, **caractérisé en ce que** chaque élément polaire (220) comporte deux encoches (250), chaque encoche (250) d'un élément polaire (220) d'un empilement d'éléments polaires étant alignée avec une encoche (250) de chacun des autres éléments polaires (220) dudit empilement d'éléments polaires (220).

4. Concentrateur de flux magnétique selon l'une des revendications 1 à 3, **caractérisé en ce que** les éléments polaires (220) ont une forme géométrique délimitée par deux arcs de cercles concentriques et par deux sections de droite non parallèles formant un angle d'ouverture (α), et une forme symétrique par rapport à un axe (301), ledit axe (301) passant par le centre des arcs de cercles concentriques et étant une bissectrice de l'angle d'ouverture (α).

5. Concentrateur de flux magnétique selon l'une des revendications 1 à 4, **caractérisé en ce que** l'empilement de tôles (300, 400) comporte une proportion de tôles du deuxième type (400) comprise entre 5% et 29%.

6. Concentrateur de flux magnétique selon l'une quelconque des revendications 1 à 5, **caractérisé en ce que** l'empilement de tôles (300, 400) comporte à chaque extrémité trois ou cinq tôles du deuxième type (400) successives.

## Patentansprüche

1. Magnetflusskonzentrator für einen Rotor (100), wobei der Rotor (100) eine Drehwelle (110) aufweist, wobei der Magnetflusskonzentrator um die Drehwelle (110) herum angeordnet ist, wobei der Rotor magnetische Bereiche (130) eines Dauermagneten aufweist, wobei der Magnetflusskonzentrator einen Stapel aus Blechen (300, 400) aufweist, wobei der Blechstapel eine Mehrzahl von Blechen von einem ersten Typ (300) und eine Mehrzahl von Blechen von einem zweiten Typ (400) aufweist, wobei jedes Blech vom ersten Typ (300) sechs Polelemente (220) aufweist, die voneinander gelöst sind, und jedes Blech vom zweiten Typ (400) sechs Polelemente (220) aufweist, die verbundene Polelemente (220b) genannt werden, die durch einen Ring miteinander verbunden sind, der sich in der Mitte des Blechs vom zweiten Typ befindet und dazu bestimmt ist, die Drehwelle (110) zu umgeben, wobei die Polelemente (220) jedes Blechs vom zweiten Typ (400) regelmäßig so um den Ring herum beabstandet sind, dass alle Abstände, die sich zwischen zwei benachbarten verbundenen Polelementen (220b) befinden, identisch sind, wobei jedes Polelement (220) eines Blechs (300, 400) des Blechstapels mit einem Polelement (220) eines anderen Blechs (300, 400) des Blechstapels so ausgerichtet ist, dass sechs regelmäßig beabstandete Stapel aus Polelementen (220) gebildet werden, **dadurch gekennzeichnet, dass** der Blechstapel (300, 400) Anordnungen von zehn oder fünfzehn Blechen vom ersten Typ (300) aufweist, wobei sich die Anordnungen mit einem Blech vom zweiten Typ (400) abwechseln.

2. Magnetflusskonzentrator nach Anspruch 1, **dadurch gekennzeichnet, dass** jedes Polelement (220) eine Klammer (140) aufweist, die von einem Reliefbereich auf dem Polelement (220) gebildet ist, und dadurch, dass die Klammern (140) von gestapelten Polelementen (220) so ineinandergreifen, dass die Bleche (300, 400) aneinander gehalten werden.

3. Magnetflusskonzentrator nach einem der Ansprüche 1 oder 2, **dadurch gekennzeichnet, dass** jedes Polelement (220) zwei Aussparungen (250) aufweist, wobei jede Aussparung (250) eines Polelements (220) eines Stapels aus Polelementen mit einer Aussparung (250) jedes der anderen Polelemente (220) des Stapels aus Polelementen (220) ausgerichtet ist.

4. Magnetflusskonzentrator nach einem der Ansprüche 1 bis 3, **dadurch gekennzeichnet, dass** die Polelemente (220) eine geometrische Form, die von zwei konzentrischen Kreisbögen und von zwei nicht parallelen Geradenabschnitten begrenzt ist, die einen Öffnungswinkel (α) bilden, und eine um eine Achse (301) symmetrische Form aufweisen, wobei die Achse (301) durch den Mittelpunkt der konzentrischen Kreisbögen verläuft und eine Winkelhalbierende des Öffnungswinkels (α) ist.

5. Magnetflusskonzentrator nach einem der Ansprüche 1 bis 4, **dadurch gekennzeichnet, dass** der Stapel aus Blechen (300, 400) einen Anteil von Blechen vom zweiten Typ (400) zwischen 5 % und 29 % aufweist.

6. Magnetflusskonzentrator nach einem der Ansprüche 1 bis 5, **dadurch gekennzeichnet, dass** der Stapel aus Blechen (300, 400) an jedem Ende drei oder fünf aufeinanderfolgende Bleche vom zweiten Typ (400) aufweist.

## Claims

1. Magnetic flux concentrator for a rotor (100), the rotor (100) comprising a rotary shaft (110), the magnetic flux concentrator being disposed around the rotary shaft (110), the rotor comprising magnetic zones (130) of a permanent magnet, the magnetic flux concentrator comprising a stack of laminations (300, 400), the stack of laminations comprising a plurality of laminations of a first type (300) and a plurality of laminations of a second type (400), each lamination of the first type (300) comprising six pole elements (220) that are detached from one another and each lamination of the second type (400) comprising six pole elements (220), referred to as linked pole elements (220b), that are connected to one another by a ring situated in the centre of the lamination of the second type and intended to surround the rotary shaft (110), the pole elements (220) of each lamination of the second type (400) being regularly spaced apart around the ring such that all of the spacings situated between two adjacent linked pole elements (220b) are identical, each pole element (220) of a lamination (300, 400) of the stack of laminations being aligned with a pole element (220) of another lamination (300, 400) of the stack of laminations so as to form six regularly spaced apart stacks of pole elements (220), **characterized in that** the stack of laminations (300, 400) comprises sets of ten or fifteen laminations of the first type (300), the sets alternating with a lamination of the second type (400).

2. Magnetic flux concentrator according to Claim 1, **characterized in that** each pole element (220) comprises a clip (140) formed by a zone in relief on said pole element (220), and **in that** the clips (140) of stacked pole elements (220) interlock with one another so as to hold the laminations (300, 400) of the stack of laminations together.

3. Magnetic flux concentrator according to either of Claims 1 and 2, **characterized in that** each pole element (220) comprises two slots (250), each slot (250) of a pole element (220) of a stack of pole elements being aligned with a slot (250) of each of the other pole elements (220) of said stack of pole elements (220).

4. Magnetic flux concentrator according to one of Claims 1 to 3, **characterized in that** the pole elements (220) have a geometrical shape delimited by two concentric circular arcs and by two non-parallel straight sections forming an opening angle (α), and a symmetrical shape with respect to an axis (301), said axis (301) passing through the centre of the concentric circular arcs and being a bisector of the opening angle (α).

5. Magnetic flux concentrator according to one of Claims 1 to 4, **characterized in that** the stack of laminations (300, 400) has a proportion of laminations of the second type (400) of between 5% and 29%.

6. Magnetic flux concentrator according to any one of Claims 1 to 5, **characterized in that** the stack of laminations (300, 400) comprises, at each end, three or five successive laminations of the second type (400).
